# EUROPEAN PATENT SPECIFICATION

(11) **EP 4 102 478 B1**
(45) Date of publication and mention of the grant of the patent: **19.02.2025**
(21) Application number: 22177848.3
(22) Date of filing: 08.06.2022
(51) Int. Cl.: G08B 25/00, G08B 25/10, H04W 88/06

(54) **ELECTRONIC MONITORING SYSTEM WITH SECONDARY COMMUNICATION PATH FOR EVALUATING DEVICE LOCATIONS**
ELEKTRONISCHES ÜBERWACHUNGSSYSTEM MIT SEKUNDÄREM KOMMUNIKATIONSPFAD ZUR AUSWERTUNG VON VORRICHTUNGSSTANDORTEN
SYSTÈME DE SURVEILLANCE ÉLECTRONIQUE DOTÉ D'UN CHEMIN DE COMMUNICATION SECONDAIRE POUR ÉVALUER DES EMPLACEMENTS DE DISPOSITIF

(30) Priority: 08.06.2021 US 202163208224 P
(43) Date of publication of application: 14.12.2022
(73) Proprietor: Arlo Technologies, Inc., Carlsbad, CA 92008 (US)
(72) Inventor: McRae, Matthew, Laguna Niguel, CA (US)
(74) Representative: Grünecker Patent- und Rechtsanwälte PartG mbB

(56) References cited:
- US-A1- 2019 386 892
- US-A1- 2020 184 788

## Description

### 1. Field of the Invention

The present invention relates to an electronic monitoring system and, more particularly, to an electronic monitoring system in which multiple communication paths are implemented to evaluate potential mounting locations of wirelessly networked devices.

### 2. Discussion of the Related Art

Security and other monitoring systems are increasing in popularity and technical sophistication. Recent monitoring systems implemented through WLANs (wireless local area networks) have simplified hardware mounting and installation by eliminating various hardwired signal-conducting wires. Such systems typically include one, and more typically several monitoring devices, such as cameras and sensors, that communicate wirelessly with a base station hub in communication with a wide area network (WAN), typically via the Internet. The base station hub also communicates wirelessly with one or more user devices such as a smart phone, and possibly with an external server such as a cloud-based server.

Other improvements of monitoring systems include enhanced versatility that corresponds to the development of different types of monitoring devices that can collectively provide a more comprehensive security or monitoring experience.

Although an availability of a variety of wireless monitoring devices simplifies initial setting up and later customization of monitoring systems, mounting numerous monitoring devices in diverse locations can present numerous challenges. It can be difficult to assess potential wireless connectivity issues when evaluating potential mounting locations for monitoring devices within a system. A system is typically installed by initially setting up a base station hub by connecting it to an internet-connected router hub. Accordingly, the location of the base station hub typically is influenced by the location of the internet-connected router hub. The monitoring devices must be mounted in locations that are close enough to the base station hub to connect to the system through a wireless communication path between the monitoring device and the hub. Although hubs typically have defined communication ranges based on, for example, the particular hardware components and communication protocol(s), the actual distances from which a monitoring device can communicate with its hub and, therefore, the maximum working distances of the monitoring device from the associated hub, varies greatly based on numerous factors. These factors include the number and types of obstructions between the monitoring device and the base station hub, the locations of potential interference-creating devices, and the relative orientations of the monitoring device, the hub, and their respective antennas. Due to these factors, an actual communication zone of a WLAN is typically not defined by an area of uniform or even constant radius of connectivity, swept about the hub(s). It instead is of irregular and variable shape. Accordingly, when trying to evaluate suitable mounting locations of monitoring devices, especially when the potential mounting locations are near an outer boundary of a hub's maximum communication range, users or installers may resort to guess-and-check or trial and error types of evaluations.

The need therefore has arisen to provide a monitoring system and method configured such that suitable locations for a monitoring device can be determined during system setup even if the monitoring device is located outside of a WLAN.

The need additionally has arisen to provide a monitoring system and method that provides for at least limited functionality of monitoring devices in the event of a communication failure over a WLAN or positioning of a monitoring device outside of the WLAN.
US 2020/184788 A1 relates to a technique for changing topology of a wireless network in a multi-band wireless networking system. In a wireless network with multiple wireless networking devices and one or more client devices, communications between the wireless networking devices occurs via a backhaul channel, and communication between the client(s) and the wireless networking devices occurs via a fronthaul channel. At boot up, a wireless networking device configures the wireless network with a certain topology. After the topology is initially configured, the wireless networking device determines a network-related parameter and changes the topology of the wireless network based on the network-related parameter.
US 2019/386892 A1 relates to systems and methods comprising a gateway located at a premise forming at least one network on the premise that includes a plurality of premise devices. A sensor user interface (SUI) is coupled to the gateway and presented to a user via a remote device. The SUI includes at least one display element. The at least one display element includes a floor plan display that represents at least one floor of the premise. The floor plan display visually and separately indicates a location and a current state of each premise device of the plurality of premise devices.

### SUMMARY OF THE INVENTION

The invention is defined in the appended claims. In accordance with a first aspect of the invention, one or more of the identified needs is met by a system with multiple wireless communication paths that permits implementation of a connection failure-induced fail-over or fallback strategy that provides a seamless communication environment that can be used for, e.g., evaluations of appropriateness of potential mounting locations for monitoring devices of a security system.

In accordance with another aspect of the invention, the system can be used to provide real-time feedback to facilitate identifying a suitable mounting location (including device position) of a monitoring device. To evaluate the suitability of mounting locations, the user may carry the monitoring device and a user interface, typically implemented as an app (application) on a mobile device or other user device, to different potential mounting locations. The user interface provides a real-time display of whether the monitoring device is connected to the intended (primary) network, such as a WIFI network, or if it is out of range and disconnected from such primary communication path. As the user moves the monitoring device, the user interface continuously displays connectivity status, allowing real-time feedback of transitioning from in range to out of range or vice-versa as the monitoring device is moved around. The connectivity information can be transmitted through a secondary communication path, which has a longer range than the primary communication path. Signals may be transmitted over the secondary communication path in the sub-GHz or rf frequency range, which has a considerably longer transmission range than signals transmitted over a 2.4 GHz or 5.0 GHz range usually employed by WIFI. This allows the monitoring device and user interface to remain connected through the network and provide the real-time feedback and connection status information about the primary communication path, even when the monitoring device and user interface are out-of-range and disconnected from the primary communication path.

Each monitoring device has two communication devices or radios, a primary radio that communicates through the primary communication path and a secondary radio that communicates through the secondary communication path. The secondary radio operates at a lower frequency than the primary radio. The low(er) frequency of the secondary radio communications may be in a sub-GHz (gigahertz) frequency band, such as an RF band, whereas the primary radios may implement a WIFI communications standard at a frequency at or above 2.4 GHz, such as a 2.4GHz frequency band and/or a 5GHz frequency band In accordance with another aspect of the invention, connectivity states of the monitoring device, including whether the monitoring device is communicating through the primary communication path, is displayed or otherwise communicated to the user. When the system experiences a communication failure, such as when a monitoring device is moved out of range of the monitoring device's primary radio, the system automatically transitions or switches from its default primary communication path to a fail-over or fallback secondary communication path in which the monitoring device communicates via the secondary radio. This facilitates evaluating potential mounting locations and positions of monitoring components because fail-over or automatic switching from a default primary communication path to a fallback secondary communication path can be detected and communicated through a user device, alerting the user when the monitoring device is positioned out of range of its hub during a location evaluation. When the monitoring device is positioned out of range of the device's primary radio, the device communicates over the secondary communication path, and an out of range or other related message is presented to the user device, alerting the user or installer that the particular location or position is unacceptable based on connectivity issues.

These and other features and advantages of the invention will become apparent to those skilled in the art from the following detailed description and the accompanying drawings
The invention is defined by the subject-matter of the independent claims. Advantageous examples of the present invention are the subject-matter of the dependent claims.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic representation of an electronic monitoring system with a secondary communication path for evaluating communication quality of a potential mounting location of a monitoring device in accordance with an aspect of the invention;
FIG. 2 is a schematic representation of a variant of the electronic monitoring system with a secondary communication path for potential mounting location evaluations of FIG. 1 in accordance with an aspect of the invention;
FIG. 3 is a schematic representation of data communication through a primary communication path of the system in an operational state in accordance with an aspect of the invention;
FIG. 4 is a schematic representation of the system in a fault state with data communication through the secondary communication path due to a range or other connectivity issue(s) in the primary and communication path in accordance with an aspect of the invention;
FIG. 5 is a schematic representation of disrupted communications with the system in a fault state due to a range or other connectivity issue(s) in both the primary and secondary communication paths in accordance with an aspect of the invention; and
FIG. 6 is a flowchart illustrating a communication path switching operation for maintaining system communications during connection issues of a primary communication path to facilitate evaluating communication quality of a potential mounting location of a monitoring device in accordance with an aspect of the invention.

### DETAILED DESCRIPTION OF THE PREFERRED EMBODIMENTS

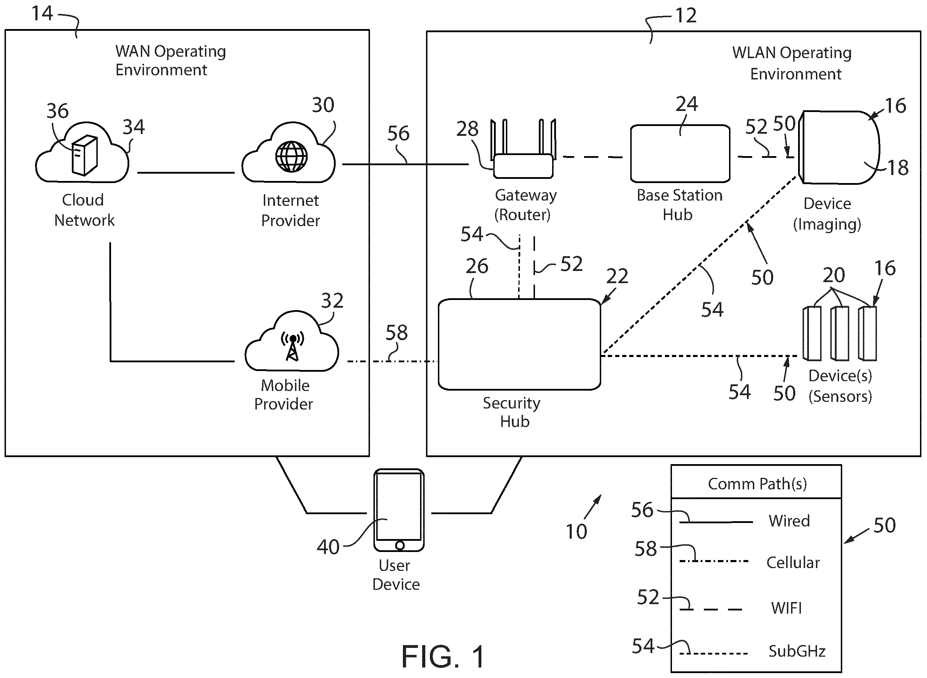

Referring now to FIG. 1, in accordance with an aspect of the invention, an electronic monitoring system 10 is provided that is implemented in a WLAN (wireless local area network) operating environment or WLAN 12. The WLAN 12 is communicatively connected to a WAN (wide area network) operating environment or WAN 14. Within WLAN 12, various monitoring devices 16, sometimes referred to as "client devices," are wirelessly networked to a base station or high frequency hub 24 which, in turn, communicates with the WAN 14 via a gateway hub shown as gateway router 28. Most systems will employ several monitoring devices 16 of the same or varying configurations as described below. Base station hub 24 and router 28 provide a high frequency connection to the WAN 14. Base station hub 24 may be eliminated as a stand-alone module if at least part of its functionality is incorporated into the gateway router 28 and any remaining functionality is incorporated in one or more other device(s), in which case the router also serves as a base station hub. The system also includes a security hub 26 that communicates with the monitoring device(s) 16 and with the WAN 14 and that provides a low frequency connection between the WAN 14 and the monitoring devices 16. Security hub 26 also communicates with the router 28, such as through a high frequency connection 52 and/or a low frequency connection 54 to the router 28. Conceivably, the security hub 26 also could be provided with the capability providing a high frequency connection with the devices 16. Thus, at least some of the monitoring devices have two radios operating at different frequencies. A first, "primary" communication device or radio operates at a high frequency, typically of 2.4 GHz to 5 GHZ, during period of normal conductivity to perform monitoring and data capture functions such as video capture and transmission, sound transmission, motion sensing, etc. The second or "secondary" communication device or radio may be of considerably longer frequency in the sub-GHz or even RF range and may have longer range than the primary radio. The secondary radio may be operable, when communications over the primary communication path are unavailable, to permit the system to generate, transmit and display information obtained from the performance diagnostic and troubleshooting operations.

Still referring to FIG. 1, each monitoring device 16 may perform any of a variety of monitoring, sensing, and communicating functions. One such device may include an imaging device 18, such as a video camera, that is configured to capture and store visual images or video of the monitored area within the environment. One such camera is a video camera, which could be an Arlo^{®} camera available from Arlo Technologies, Inc. of Carlsbad, California. Typically, system 10 will include multiple monitoring devices 16 that are mounted to face toward respective areas being monitored, such as around a building or other structure or area. Instead of or in addition to containing a video camera or other imaging device 18, one or all of the monitoring devices 16 may include one or more sensors 20 configured to detect one or more types of conditions or stimulus, for example, motion, opening or closing events of doors or windows, the presence of smoke, carbon monoxide, water leaks, and temperature changes. The monitoring devices 16 may further include or be other devices such as audio devices, including microphones, sound sensors, and speakers configured for audio communication or providing audible alerts, such as Arlo Chime audible devices. The cameras or imaging devices 18, sensors 20, or other monitoring devices 16 also may be incorporated into form factors of other house or building accessories, such as doorbells, floodlights, etc.

Still referring to FIG. 1, gateway router 28 is typically implemented as a WIFI hub that communicatively connects WLAN 12 to WAN 14 through an internet provider 30. Internet provider 30 includes hardware or system components or features such last-mile connection(s), cloud interconnections, DSL (digital subscriber line), cable, and/or fiber-optics. As mentioned, the functionality of the base station hub 24 also could be incorporated into the router 28, in which case the router 28 becomes the base station hub as well as the router. Another connection between WLAN 12 and WAN 14 may be provided between security hub 26 and a mobile provider 32. Mobile provider 32 includes hardware or system components or features to implement various cellular communications protocols such as 3G, 4G, LTE (long term evolution), 5G, or other cellular standard(s). Besides the mobile connection, security hub 26 is typically also configured to connect to WAN 14 by way of its connection to router hub 28 and the router hub's connection to WAN 14 through internet provider 30. Each of the internet provider 30 and mobile provider 32 allows the components of system 10 to interact with a backend system or control services that can control functions or provide various processing tasks of components of system 10, shown as a cloud-based backend control service system 34, which could be an Arlo SmartCloud system. The backend system, such the cloud-based control service system 34 includes at least one server 36 and typically provides, for example, cloud storage of events, AI (artificial intelligence) based processing such as computer vision, and system access to emergency services.

Still referring to FIG. 1, one or more user devices 40, such as a smart phone, tablet, laptop, or PC may communicate with various components or devices within each of WLAN 12 and WAN 14 to provide an interface through which a user may interact with system 10. Each user device 40 includes a display system that typically includes both an audio display and a video display such as a touchscreen. Each user device 40 also has internal computing and storage capabilities and a program or application, such as the Arlo Smart application, serving as the user interface with the remainder of system 10.

Still referring to FIG. 1, within WLAN 12, multiple communication paths 50 are defined that transmit data between the various components of system 10. Communication paths 50 include a default or primary communication path 52 providing communication between the monitoring device 16 and the base station hub 26, and a fail-over or fallback secondary communication path 54 providing communication between the monitoring device 16 and the security hub 26. Optionally, some of the monitoring devices 16 that do not require high bandwidth to operate, such as the sensors 20 shown in FIG. 1, may be able to fully communicate through the secondary communication path 54 after a fail-over path-switching event or may be configured to only communicate through the secondary communication path 54. Thus, even during a failure of the primary communication path 52, sensors 20 will continue to operate normally. Other monitoring devices 16 that require high bandwidth to communicate may maintain at least some of their functions and operations but may perform these at lower-bandwidths and therefore transmit less data. An example is an imaging device 18 that may continue its optical monitoring activities of an environment, but in a low-data mode that implements still image(s) and/or video capture with lower-resolution (for both still images and video capture) and/or shorter clip duration (for video capture) while communicating through the secondary communication path 54 than in its normal operational mode(s).

Still referring to FIG. 1, a collective area in which device communication can occur through the primary communication path 52 defines a primary coverage zone. A second, typically extended, collective area in which the device communication can occur through the secondary communication path 54 defines a secondary coverage zone. A wired communication path 56 is shown between the router 28 and the internet provider 30, and a cellular communication path 58 is shown between security hub 26 and mobile provider 32. WAN 14 typically includes various wireless connections between or within the various systems or components, even though only wired connections 56 are shown. The controller of one or more of the monitoring devices 16 also could provide a wireless communication path 52 directly to the router 28.

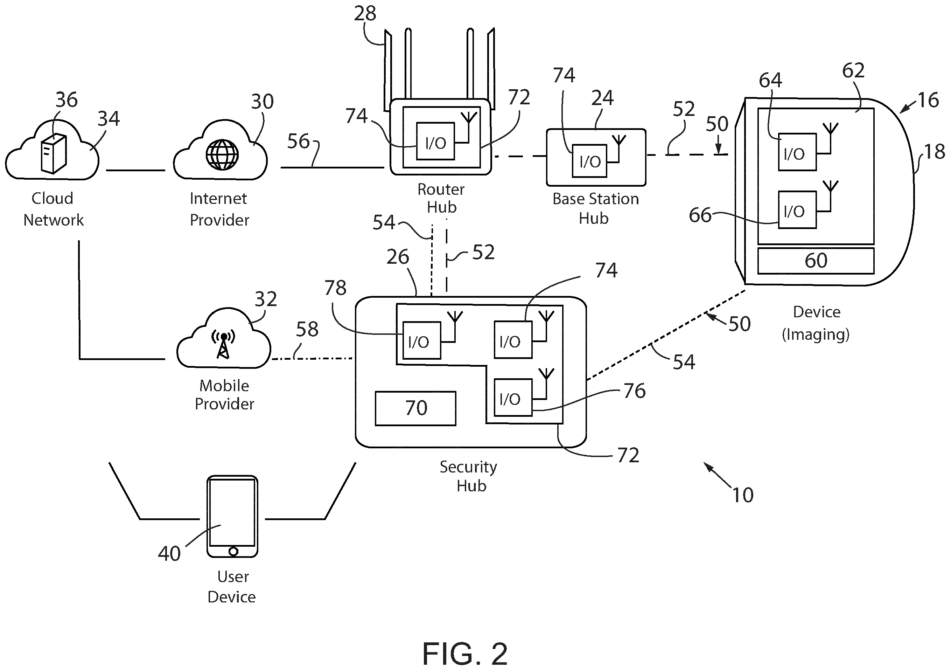

Referring now to FIG. 2, system 10 is configured to implement a seamless communication environment by implementing a communication path switching strategy as a function of the operational state of primary and/or secondary communication paths 52, 54. The seamless communication environment may be achieved by providing the monitoring device(s) 16 and hubs 24 and 26 with circuitry, software, and cooperating components that facilitate recognizing, for example, connectivity issues in the primary communication path 52. If connectivity issues in the primary communication path 52 are recognized, then system 10 automatically switches to implementing data transfer through the secondary communication path 54 in order to maintain communications through system 10 and facilitate troubleshooting the issues with primary communication path 52.

Still referring to FIG. 2, each monitoring device 16 is configured to acquire data and to transmit it to a respective hub 24 and/or 26 for further processing and/or further transmission to a server such as the server 36 of the cloud-based control service system 34 and/or the user device(s) 40. The server 36 or other computing components of system 10 or otherwise in the WLAN 12 or WAN 14 can include or be coupled to a microprocessor, a microcontroller or other programmable logic element (individually and collectively considered "a controller") configured to execute a program. The controller(s) also may be contained in whole in the monitoring device 16, base station hub 24, security hub 26, and/or the WIFI hub or router 28 Alternatively, interconnected aspects of the controller and the programs executed by it could be distributed in various permutations within the monitoring device 16, the hubs 24 and 26, router 28, and the server 36. This program may be utilized in filtering, processing, categorizing, storing, recalling and transmitting data received from the monitoring device 16 via the hubs 24 and 26, router 28, and 36. Server 36 or other appropriate system device may also be in communication with or include a computer vision program ("CV"), which can apply one or more filters or processes, such as edge detection, facial recognition, motion detection, etc., to detected one or more characteristics of the recording such as, but not limited to, identifying an individual, animal, vehicle, or package present in the recording.

Still referring to FIG. 2, each monitoring device 16 may be battery powered or wired to a power source and is shown here with a power supply 60. Each monitoring device 16 has circuitry 62 that includes corresponding hardware, firmware, software, or any combination thereof. Circuitry 62 of camera-type imaging device 18 implementations of monitoring device 16 may include, for example, imagers, an audio circuit, a media encoder, a processor, and a non-transient memory storage device, among other components. Regardless of the particular type of monitoring device 16, the circuitry 62 of monitoring devices 16 include multiple wireless I/O communication devices or radios, including a primary radio 64 and a secondary radio 66.

Still referring to FIG. 2, as shown in security hub 26, each hub has circuitry 72 that includes corresponding hardware, firmware, software, or any combination thereof for controlling, for example, data transmission or other communications through respective segments of system 10. Circuitry 72 includes a processor and a non-transient memory storage device, among other components. Circuitry 72 of the different hubs of system 10 may have different numbers and types of wireless I/O communication devices or radios, while allowing for the establishment discrete communication paths 50, with each radio including, for example, a transceiver and cooperating antenna for transmitting and receiving signals or data. For example, the circuitry 72 of router 28 is shown with a primary radio 74 that transmits data within the WLAN 12 (FIG. 1), whereas the circuitry of security hub 26 is shown with multiple radios. The security hub's 26 radios include a primary radio 74 which communicates with the primary radio 74 of router 28, a secondary radio 76 which communicates with the secondary radio 66 of the monitoring device 16 through the communication paths 54 of WLAN 12 (FIG. 1), and a cellular radio 78 that transmits data between the WLAN 12 (FIG. 1) and WAN 14 (FIG. 1) through the cellular communication path 58.

Still referring to FIG. 2, primary radios 64, 74 transmit data at a different frequencies and bandwidths than the secondary radios 66, 76 so that the primary and secondary communication paths 52, 54 correspondingly define different operational frequencies and bandwidths. Typically, the primary communication path 52 has a higher frequency, a higher bandwidth, and a lower range than the secondary communication path 54. More typically, the primary communication path 52 provides medium range connectivity and operates using a WIFI communication protocol, such as those prescribed by the IEEE 802.11 standards. Although the primary communication path 52 is illustrated as a single path, it is understood that the primary communication path 52 may provide multi-component WIFI communications by, for example, dual-band implementation(s) and corresponding radio(s) that can communicate at both 2.4GHz and 5 GHz WIFI frequencies. Suitable frequencies of the sub-GHz secondary communication path 54 include RF ranges of 800-900Mhz, 80-90Mhz, and cellular (3G, 4G, LTE, 5G) bands, and which may be a proprietary communications protocol, such as the ArloRF sub-GHz protocol.

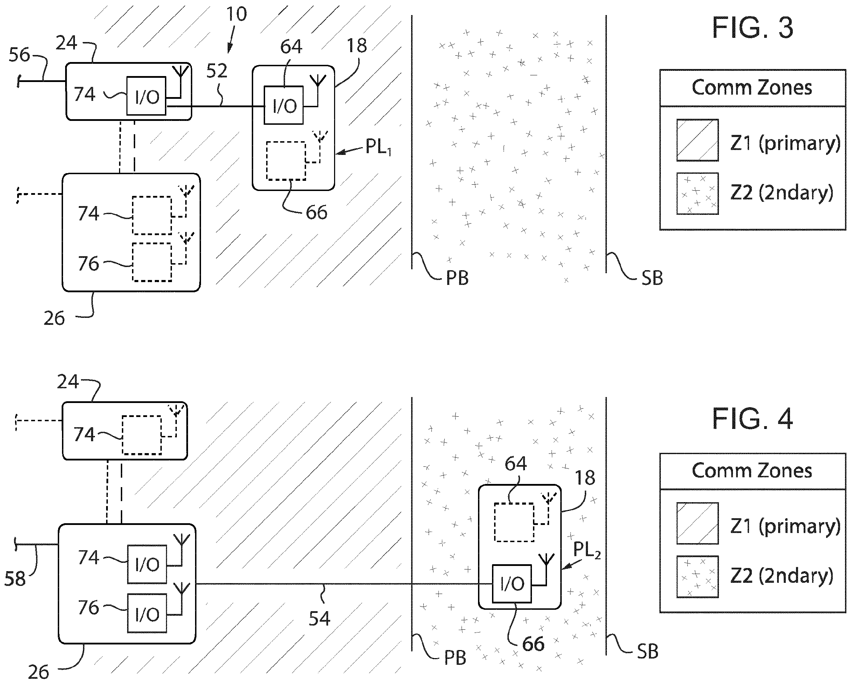

Referring to FIGS. 3-5, a representation of radio and communication path control methodologies to evaluate communication quality at different potential monitoring device mounting locations is illustrated, using an example with an imaging device 18 as a monitoring device 16 (FIG. 1) and with different radios implemented in different hubs (FIG. 1) that are shown as security hub 26 and base station hub 24. Referring now to FIG. 3, imaging device 18 is shown in a first potential mounting location, represented as potential location PL1. This particular potential location PL1 provides an acceptable mounting location and position within range of the primary radios 64 and 74, and, thus, capable of communicating through the primary communication path 52. A collective area in which device communication can occur through the primary communication path 52 to provide acceptable potential mounting locations for the imaging device 18 is defined by a primary coverage zone, represented as primary zone Z1. An outer boundary of primary zone Z1, shown as primary boundary PB, corresponds to a perimeter of area or end of a range at which effective communication can be established through the primary communication path 52. Typically, primary zone Z1 has an irregular shape as defined by primary boundary PB since the particular range at which base station hub 24 can communicate with an imaging device 18 in any particular direction is defined as a function of, for example, the particular relative orientations of the base station hub 24 and imaging device 18 and/or their antennae, as well as the number and types of obstructions between them and the locations of potential interference-creating devices. External interference or even jamming can also affect the shape and size of the primary zone Z1. When the imaging device 18 is positioned in the primary zone Z1, system 10 operates in its default and functioning operational state over the primary communication path 52 via the primary radios 64, 74. This shape is also variable given the fact that obstructions or interference-generating devices may move into and out of the vicinity of the system 10.

Still referring to FIG. 3, when imaging device 18 is in an acceptable potential mounting location such as P1, the imaging device's 18 primary radio 64 and the base station hub's 34 primary radio 74 are communicatively connected. In a WIFI implementation of base station hub 24, this default primary connection provides WIFI communications within the WLAN 12 (FIG. 1) for transmitting data through system 10 and typically from WLAN 12 (FIG. 1) to WAN 14 (FIG. 1) through the internet provider system 30 (FIG. 1) for processing by server 36 (FIG. 1). The data transmitted through the primary communication path 52 may include monitoring data. Monitoring data is typically data that corresponds to the normal use of a particular monitoring device. For example, monitoring data from imaging device 18 may correspond to an image, captured frames, or a video clip. If the monitoring device additionally includes a motion sensor and a microphone, it may also include a trigger signal indicative of activation of the sensor and/or sound. When data is transmitted through the primary communication path 52 during a monitoring device location evaluation procedure, typically server 36 (FIG. 1) transmits connection data to the user device 40 (FIG. 1) to display connection status information that corresponds the primary communication path's status, allowing the user to quickly visually or otherwise confirm that potential location PL1 is acceptable.

Referring now to FIG. 4, a second potential mounting location of imaging device 18 is shown, represented as potential location PL2, which is beyond the primary boundary PB and, therefore, outside of the primary zone Z1. Locations outside of primary zone Z1 are typically unacceptable mounting locations or positions for the imaging device 18 to suitably communicate through the primary communication path 52 of system 10. In potential location PL2, system 10 recognizes a fault state, with a failure in the communication through the primary communication path 52. This failure could occur for any of a number or reasons. Examples include a primary RF (radio frequency) network outage, a primary ISP (internet service provider) outage, a primary network SSID (service set identifier) change, a primary network password or authentication failure, a possible moving of the imaging device 18 out of range of the primary radios 64, 74 (FIG. 2), network interference issues, and power loss issues. During a fault state, the imaging device 18 may detect the communication failure, for example, by way of a device polling strategy, roaming scan, or other suitable connectivity-confirmation technique. When imaging device 18 detects a fault state, it may command a response from itself, which may include attempting to reconnect the imaging device's primary radio 64 to the hub's 24 primary radio 74. If the primary communication path 52 is defined by a dual-band WIFI system, then imaging device 18 may attempt to reconnect the primary radios 64, 74 by broadcasting through the other WIFI frequency than what was dropped in the interruption. For example, if a 5GHz connection dropped, then imaging device 18 may command an attempted establishment of a 2.4GHz connection to establish communications through the primary communication path 52.

Referring still to FIG. 4, during a potential mounting location evaluation, if reconnection (or repeated initial connection attempts) through the primary communication path 52 fails because the imaging device is in the secondary zone Z2 beyond the barrier PB, then a fail-over path switching event occurs automatically to provide communication through the secondary communication path 54 via the secondary radios 66, 76. An outer boundary of secondary zone Z2, shown as secondary boundary SB, corresponds to a perimeter of the end of the area or maximum range at which effective communication can be established through the secondary communication path 54 via the radios 66, 76. This boundary SB represents the system's maximum communication range. Like the perimeter shape of primary zone Z1 and for the same reasons, the perimeter shape of secondary zone Z2 defined by the secondary boundary SB is typically irregular and variable.

Still referring now to FIG. 4, if potential location PL2 is within the secondary zone Z2, then a fail-over or fallback connection is made for communications through the secondary communication path 54. Typically, any gap in data transmission only corresponds to an amount of time in recognition of the fault state and/or attempted reconnection of the primary communication path 52. The fail-over automatic switching includes activating the secondary radio 66 within imaging device 18, which is typically in a low power state or "sleep" mode while system 10 is in an operational state with the primary communication path 52 connected. When activated by a trigger event such as the failing of one or more failed reconnection attempts of the primary communication path 52, the imaging device 18 activates the secondary radio 66 and its data transmissivity to secondary radio 76 of security hub 26. When a fail-over or fallback connection is made for communications through the secondary communication path 54, imaging device's 18 secondary radio 66 is communicatively connected to the security hub's 26 secondary radio 76. In a sub-GHz implementation of security hub 26, this fallback or secondary connection provides sub-GHz communications within the WLAN 12 (FIG. 1) for transmitting data through system 10, for example, between the monitoring imaging device 18 (FIG. 1) and the security hub 26. Security hub 26 is typically configured for data transmission on a cellular, sub-GHz, frequency for communication from WLAN 12 (FIG. 1) to WAN 14 (FIG. 1) through the mobile provider system 32 (FIG. 1) for processing by the external server 36 (FIG. 1). It is understood that security hub 26 may also communicate with server 36 (FIG. 1) through router 28 (FIG. 1) and the internet provider 30 (FIG. 1). The data transmitted through the secondary communication path 54 may include diagnostic data. Diagnostic data typically includes data that can be used to identify the issue or fault condition of the connectivity failure in the primary communication path 52. For example, diagnostic data may correspond to statuses of components within system 10. Imaging device 18, security hub 26, or another system component that may define a node communicating by way of the secondary communication path 54, may command a diagnostic scan within the WLAN 12 (FIG. 1). The results of such a diagnostic scan may include the component statuses or other state information within WLAN 12 (FIG. 1).

Still referring to FIG. 4, similar to the connection status notifications during a successful communication connection through primary communication path 52, after a fail-over or fallback connection during which communication is established through the secondary communication path 54 during a monitoring device location evaluation procedure, server 36 (FIG. 1) transmits connection data to the user device 40 (FIG. 1). The user device 40 (FIG. 1) displays the connection status information regarding he primary communication path's failed status, such as by displaying "CAMERA X OUT OF RANGE" on the user device's screen, where "CAMERA X" is the monitoring device undergoing evaluation. This notification allows the user to quickly visually or otherwise confirm that potential location PL2 is unacceptable based on communication issues (non-connectivity) in the primary communication path 52.

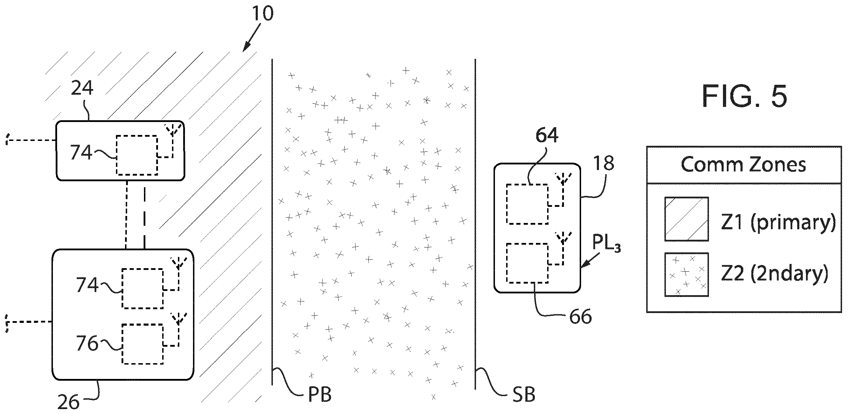

Referring now to FIG. 5, a third potential mounting location of imaging device 18 is shown, represented as potential location PL3, which is beyond both the primary and secondary boundaries PB, SB and therefore, outside of both of the primary and secondary zones Z1, Z2. Locations outside of secondary zone Z2 are unacceptable mounting locations or positions for the imaging device 18 to suitably communicate through system 10. In potential location PL3, system 10 is in a fault state, with no communication through either the primary communication path 52 or the secondary communication path 54. This is shown by the lack of any connection of imagining 18 to either hub 26 or 24 in FIG. 5. In one example, during a fault state generated by the imaging device beyond boundary SB or generated by other factors altogether, such as failure of one or more of the radios, disruption in WIFI communications etc., imaging device 18 will detect total communication failure(s). Failure may be detected, for example, as by timing-out or failing at a defined number of sequential communication connection attempts for the primary and secondary communication paths 52, 54. These attempts may take the form of device polling strategies, roaming scans, or other suitable connectivity-confirmation techniques. The imaging device thereafter will sit idle or in a low power state or low power mode. The server 36 may cause the user device 40 to display a suitable notification such as by visually displaying a "SYSTEM FAULT" on the screen of the user device

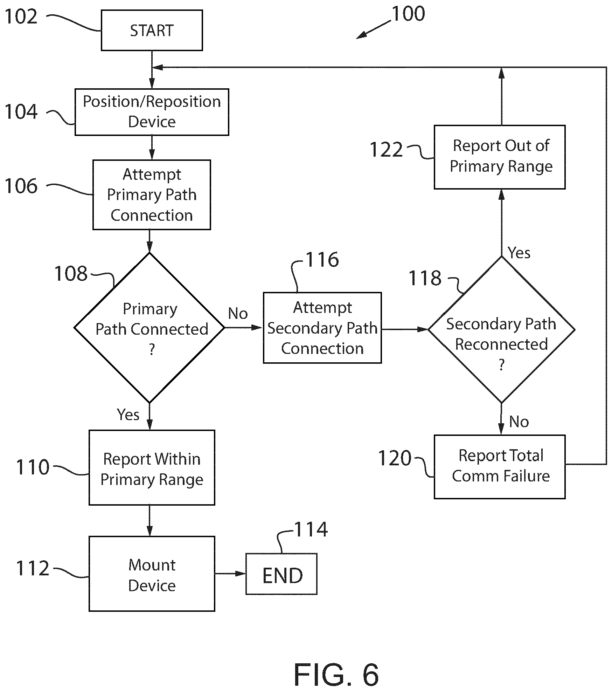

Referring now to FIG. 6, and with background reference to FIGS. 1 and 2, the evaluating of potential mounting locations for monitoring device such as an imaging device 18 is shown schematically in the flowchart as process 100, which starts at block 102. At block 104, a monitoring device such as imaging device 18 is placed in a new location. This action may include the user placing the imaging device 18 in an initial location or moving it from an original location to an updated location as discussed below. At block 106, the evaluation of the preliminary communication path 52 begins by the imaging device 18 activating its primary radio 64 for establishing a connection by way of, for example, a WIFI protocol to the primary radio 74 of base station hub 24. At decision block 108, imaging device 18 determines whether the primary communication path 52 is functioning to transfer data between the primary radios 64, 74. If the primary radios 64, 74 are communicating through the primary connection path 52 (as shown schematically in FIG. 3), then, at block 112, system 10 reports that the imaging device 18 is within the primary range or primary zone Z1. This effect may be achieved by the server 36 pushing an automated notification acknowledging the primary communication path 52 connection for display by the user device 40. For example, a visual "CAMERA X IN RANGE" notification may be displayed on the device's screen. The user may then mount the imaging device 18 at the evaluated location in block 12, and the process 100 proceeds to END in block 114

If the process 100 determines at block 108 that there is no connection through the preliminary communication path 52, then a fail-over or fallback switching event(s) attempts to establish communications through the secondary communication path, as represented at block 116. The imaging device 18 activates its secondary radio 66 to attempt communication with secondary radio 76 of security hub 26. At decision block 118, the imaging device 18 evaluates whether the connection was made between the secondary radios 66, 76 and, therefore, whether data transfer is occurring through the secondary communication path 54 as shown schematically in FIG. 4. If not, server 36 may push an automated message such as a visual "SYSTEM FAULT" display to user device 40 indicating a total communication failure within system 10 as represented at block 120. The user may then move the imaging device 18 to another new location at block 104 to attempt to establish connection between the monitoring device and the remainder of the system 10. If, at decision block 118, the imaging device 18 determines that a connection was made between the secondary radios 66, 76 as shown schematically in FIG. 4, then at block, system 10 uses the secondary communication path 54 to report that the imaging device 18 is outside of the primary zone Z1 or inside of the secondary zone Z2 as represented at block 122. This reporting may be done by the server 36 automatically pushing an audio and/or video notification to the user device such as a "CAMERA X OUT OF RANGE" visual notification to the screen of user device 40. The user then can move the imaging device 18 to a new location at block 104, and the process 100 advances through the various steps until communication is established through the primary communication path 52, confirmed as an acceptable location, and the imaging device 18 mounted at the location.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential".

## Claims

1. An electronic monitoring system (10) for monitoring an environment, the electronic monitoring system (10) comprising:
a hub primary radio (74) configured to transmit data in a first transmission range through a primary communication path (52) to define a primary coverage zone;
a hub secondary radio (76) configured to transmit data in a second transmission range through a secondary communication path (54) to define a secondary coverage zone, the second transmission range being longer than the first transmission range;
a monitoring device (16) configured to monitor a characteristic within the environment, the monitoring device (16) including:
a device primary radio (64) configured to transmit data at a first frequency within a frequency band at or above 2.4 GHz to communicate with the hub primary radio through the primary communication path;
a device secondary radio (66) configured to transmit data at a second frequency within a frequency band that is lower than the frequency band of the device primary radio (64) to communicate with the hub secondary radio through the secondary communication path in the event of failure to communicatively connect the monitoring device primary radio (64) to the hub primary radio (74).

2. The electronic monitoring system (10) of claim 1, further comprising a base station hub (24) housing the hub primary radio (74) and a security hub (26) housing the hub secondary radio (76).

3. The electronic monitoring system of claim 1, wherein the base station hub (24) is connected to a WAN, wide area network.

4. The electronic monitoring system (10) of claim 3, wherein the security hub (26) is connected to the WAN through a cellular provider (32).

5. The electronic monitoring system (10) of claim 1, wherein:
the monitoring device (16) is configured to evaluate a connection status of the primary communication path (52); and
the system (10) is configured to communicatively connect a user device (40) to the monitoring device (16) and to receive the connection data from the monitoring device (16)

6. The electronic monitoring system (10) of claim 5, wherein the communicative connection between the user device (40) and the monitoring device (16) is defined by:
a communicative connection between the monitoring device (16) and an external server (36) outside of the WLAN, and
a communicative connection between the external server (36) and the user device (40).

7. The electronic monitoring system (10) of any of the preceding claims, wherein the system (10) is configured to cause the user device (40) to display a message corresponding to a connectivity fault in the primary communication path (52) when the monitoring device (16) is positioned in a location that is both outside of the primary coverage zone and outside of the secondary coverage zone.

8. The electronic monitoring system (10) of claim 7, wherein the system (10) is configured to cause the user device (40) to display a message corresponding to a system fault connection to both the primary communication path (52) and the secondary communication path (54) when the monitoring device (16) is positioned outside of both the primary coverage zone and the secondary coverage e zone.

9. The electronic monitoring system (10) of any of the preceding claims, wherein the monitoring device (16) comprises at least one of:
an imaging device (18) that is configured to capture visual images or video of a monitored area within the environment;
an audio device that includes at least one of : (i) a microphone, and (ii) a speaker configured for audio communication or providing audible alerts; and
a sensor (20) configured to detect at least one of: (i) motion, (ii) opening or closing events or doors or windows, (iii) smoke, (iv) carbon monoxide, (v) water leaks, and (vi) temperature changes.

10. The electronic monitoring system (10) of any of the preceding claims, wherein the hub secondary radio (76) operates in a sub-GHz frequency band.

11. A method for evaluating a potential mounting location of a monitoring device (16) of an electronic monitoring system (10) implementing a WLAN, wireless local area network the method comprising:
placing the monitoring device (16) in a potential mounting location;
evaluating a connection status of a primary communication path (52), including:
activating a monitoring device primary radio (64);
attempting to communicatively connect the monitoring device primary radio (64) to a hub primary radio (74) that is configured to operate in a frequency band at or above 2.4 GHz for establishing communications through a primary communication path (52); and
in the event of a failure to communicatively connect the monitoring device primary radio (64) to the hub primary radio (74),
automatically activating a monitoring device secondary radio (66), and
attempting to communicatively connect the monitoring device secondary radio (66) to a hub secondary radio (76) that is configured to operate in a frequency band that is lower than the frequency band of the hub primary radio (74) for establishing communications through a secondary communication path (54).

12. The method of claim 11, further comprising:
automatically determining, using a computer program stored in a non-transient memory storage device, whether the attempt to establish communications through the primary communication path (52) was successful.

13. The method of claim 12, further comprising:
transmitting location evaluation data that corresponds to an evaluation of the potential mounting location of a monitoring device (16) through the secondary communication path (54),
displaying location acceptability information on a user device (40) based on the location evaluation data.

14. The method of claim 13, further comprising:
using a computer program stored in a non-transient memory storage device, determining whether the attempt to communicate through the secondary communication path (54) was successful, and
in response to the determination of whether the attempt to communicate through the secondary communication path (54) was successful, automatically displaying connection information on the user device (40) corresponding to a status of the monitoring device (16).

15. The method of claim 11, wherein:
the primary communication path (52) defies a primary coverage zone,
the secondary communication path (54) defines a secondary coverage zone that extends beyond the primary coverage zone; and
the method further comprises:
moving the monitoring device (16) during the evaluation of the potential mounting location;
maintaining a communicative connection of the monitoring device (16) to the WLAN while the monitoring device (16) crosses a zone boundary defined between the primary coverage zone and the secondary coverage zone by automatically switching from implementing the primary communication path (52) to implementing the secondary communication path (54).

## Patentansprüche

1. Ein elektronisches Überwachungssystem (10) zur Überwachung einer Umgebung, wobei das elektronische Überwachungssystem (10) aufweist:
ein primäres Hub-Funkgerät (74), das so konfiguriert ist, dass es Daten in einem ersten Übertragungsbereich über einen primären Kommunikationspfad (52) überträgt, um eine primäre Abdeckungszone zu definieren;
ein sekundäres Hub-Funkgerät (76), das so konfiguriert ist, dass es Daten in einem zweiten Übertragungsbereich über einen sekundären Kommunikationspfad (54) überträgt, um eine sekundäre Abdeckungszone zu definieren, wobei der zweite Übertragungsbereich länger ist als der erste Übertragungsbereich;
eine Überwachungsvorrichtung (16), die so konfiguriert ist, dass sie eine Eigenschaft innerhalb der Umgebung überwacht, wobei die Überwachungsvorrichtung (16) aufweist:
ein primäres Gerät-Funkgerät (64), das so konfiguriert ist, dass es Daten auf einer ersten Frequenz innerhalb eines Frequenzbandes bei oder über 2,4 GHz sendet, um mit dem primären Hub-Funkgerät über den primären Kommunikationsweg zu kommunizieren;
ein sekundäres Funkgerät (66) der Vorrichtung, das so konfiguriert ist, dass es Daten auf einer zweiten Frequenz innerhalb eines Frequenzbandes überträgt, das niedriger ist als das Frequenzband des primären Gerät-Funkgeräts (64), um mit dem sekundären Funkgerät der Nabe über den sekundären Kommunikationspfad zu kommunizieren, falls es nicht gelingt, das primäre Funkgerät (64) der Überwachungsvorrichtung kommunikativ mit dem primären Hub-Funkgerät (74) zu verbinden.

2. Das elektronische Überwachungssystem (10) nach Anspruch 1, das ferner eine Basisstations-Hub-Station (24), die das primäre Hub-Funkgerät (74) beherbergt, und eine Sicherheits-Hub-Station (26), die das sekundäre Hub-Funkgerät (76) beherbergt, umfasst.

3. Das elektronische Überwachungssystem nach Anspruch 1, wobei die Basisstations-Hub-Station (24) mit einem WAN, einem Weitverkehrsnetz, verbunden ist.

4. Das elektronische Überwachungssystem (10) nach Anspruch 3, wobei der Sicherheitsknoten (26) über einen Mobilfunkanbieter (32) mit dem WAN verbunden ist.

5. Das elektronische Überwachungssystem (10) nach Anspruch 1, wobei:
die Überwachungsvorrichtung (16) so konfiguriert ist, dass sie einen Verbindungsstatus des primären Kommunikationspfads (52) auswertet; und
das System (10) so konfiguriert ist, dass es ein Benutzergerät (40) kommunikativ mit der Überwachungsvorrichtung (16) verbindet und die Verbindungsdaten von der Überwachungsvorrichtung (16) empfängt.

6. Das elektronische Überwachungssystem (10) nach Anspruch 5, wobei die kommunikative Verbindung zwischen dem Benutzergerät (40) und der Überwachungsvorrichtung (16) definiert ist durch:
eine Kommunikationsverbindung zwischen der Überwachungseinrichtung (16) und einem externen Server (36) außerhalb des WLAN und
eine Kommunikationsverbindung zwischen dem externen Server (36) und der Benutzereinrichtung (40).

7. Das elektronische Überwachungssystem (10) nach einem der vorhergehenden Ansprüche, wobei das System (10) so konfiguriert ist, dass es das Benutzergerät (40) veranlasst, eine Meldung anzuzeigen, die einem Verbindungsfehler im primären Kommunikationspfad (52) entspricht, wenn sich die Überwachungsvorrichtung (16) an einem Ort befindet, der sowohl außerhalb der primären Abdeckungszone als auch außerhalb der sekundären Abdeckungszone liegt.

8. Das elektronische Überwachungssystem (10) nach Anspruch 7, wobei das System (10) so konfiguriert ist, dass es das Benutzergerät (40) veranlasst, eine Meldung anzuzeigen, die einem Systemfehler bei der Verbindung sowohl mit dem primären Kommunikationspfad (52) als auch mit dem sekundären Kommunikationspfad (54) entspricht, wenn die Überwachungsvorrichtung (16) sowohl außerhalb der primären Abdeckungszone als auch außerhalb der sekundären Abdeckungszone positioniert ist.

9. Das elektronische Überwachungssystem (10) nach einem der vorhergehenden Ansprüche, wobei die Überwachungsvorrichtung (16) mindestens eines der folgenden Merkmale umfasst:
eine Bildgebungsvorrichtung (18), die so konfiguriert ist, dass sie visuelle Bilder oder Videos eines überwachten Bereichs in der Umgebung erfasst;
eine Audio-Vorrichtung, die mindestens eines der folgenden Merkmale umfasst: (i) ein Mikrofon und (ii) einen Lautsprecher, der für die Audiokommunikation oder die Ausgabe hörbarer Warnsignale konfiguriert ist; und
einen Sensor (20), der so konfiguriert ist, dass er mindestens eines der folgenden Ereignisse erkennt: (i) Bewegung, (ii) Öffnen oder Schließen von Türen oder Fenstern, (iii) Rauch, (iv) Kohlenmonoxid, (v) Wasserlecks und (vi) Temperaturänderungen.

10. Das elektronische Überwachungssystem (10) nach einem der vorhergehenden Ansprüche, wobei das sekundäre Hub-Funkgerät (76) in einem Sub-GHz-Frequenzband arbeitet.

11. Ein Verfahren zum Bewerten eines potenziellen Montageorts einer Überwachungsvorrichtung (16) eines elektronischen Überwachungssystems (10), das ein WLAN, ein drahtloses lokales Netzwerk, implementiert, wobei das Verfahren umfasst:
Platzieren der Überwachungsvorrichtung (16) an einem potenziellen Montageort;
Bewerten eines Verbindungsstatus eines primären Kommunikationspfads (52), einschließlich:
Aktivieren eines primären Funkgeräts (64) der Überwachungsvorrichtung;
Versuch, das primäre Funkgerät (64) der Überwachungsvorrichtung kommunikativ mit einem primären Hub-Funkgerät (74) zu verbinden, das so konfiguriert ist, dass es in einem Frequenzband bei oder über 2,4 GHz arbeitet, um Kommunikationen über einen primären Kommunikationspfad (52) herzustellen; und
im Falle eines Fehlers beim kommunikativen Verbinden des primären Funkgeräts (64) der Überwachungsvorrichtung mit dem primären Hub-Funkgerät (74)
automatisches Aktivieren eines sekundären Funkgeräts (66) des Überwachungsgeräts und
Versuch, das sekundäre Funkgerät (66) des Überwachungsgeräts kommunikativ mit einem sekundären Hub-Funkgerät (76) zu verbinden, das so konfiguriert ist, dass es in einem Frequenzband arbeitet, das niedriger ist als das Frequenzband des primären Hub-Funkgeräts (74), um eine Kommunikation über einen sekundären Kommunikationsweg (54) herzustellen.

12. Das Verfahren nach Anspruch 11, ferner umfassend:
automatisches Bestimmen, unter Verwendung eines in einer nichtflüchtigen Speichervorrichtung gespeicherten Computerprogramms, ob der Versuch, eine Kommunikation über den primären Kommunikationspfad (52) herzustellen, erfolgreich war.

13. Das Verfahren nach Anspruch 12, ferner umfassend:
Übertragen von Standortbewertungsdaten, die einer Bewertung des potenziellen Montageorts einer Überwachungsvorrichtung (16) entsprechen, über den sekundären Kommunikationspfad (54),
Anzeigen von Informationen über die Eignung des Standorts auf einem Benutzergerät (40) auf der Grundlage der Standortbewertungsdaten.

14. Das Verfahren nach Anspruch 13, ferner umfassend:
Verwenden eines Computerprogramms, das in einer nichtflüchtigen Speichervorrichtung gespeichert ist, Bestimmen, ob der Versuch, über den sekundären Kommunikationspfad (54) zu kommunizieren, erfolgreich war, und
als Reaktion auf die Feststellung, ob der Versuch, über den sekundären Kommunikationspfad (54) zu kommunizieren, erfolgreich war, automatisch Verbindungsinformationen auf dem Benutzergerät (40) entsprechend einem Status der Überwachungsvorrichtung (16) anzeigt.

15. Das Verfahren nach Anspruch 11, wobei:
der primäre Kommunikationspfad (52) eine primäre Abdeckungszone definiert,
der sekundäre Kommunikationspfad (54) eine sekundäre Abdeckungszone definiert, die sich über die primäre Abdeckungszone hinaus erstreckt; und
das Verfahren ferner umfasst:
Bewegen der Überwachungsvorrichtung (16) während der Bewertung des potenziellen Montageorts;
Aufrechterhalten einer Kommunikationsverbindung der Überwachungsvorrichtung (16) mit dem WLAN, während die Überwachungsvorrichtung (16) eine zwischen der primären Abdeckungszone und der sekundären Abdeckungszone definierte Zonengrenze überquert, durch automatisches Umschalten von der Implementierung des primären Kommunikationswegs (52) auf die Implementierung des sekundären Kommunikationswegs (54).

## Revendications

1. Système de surveillance électronique (10) pour surveiller un environnement, le système de surveillance électronique (10) comprenant :
une radio primaire de concentrateur (74) configurée pour transmettre des données dans une première plage de transmission via un chemin de communication primaire (52) afin de définir une zone de couverture primaire ;
une radio secondaire de concentrateur (76) configurée pour transmettre des données dans une seconde plage de transmission via un chemin de communication secondaire (54) afin de définir une zone de couverture secondaire, la seconde plage de transmission étant plus longue que la première plage de transmission ;
un dispositif de surveillance (16) configuré pour surveiller une caractéristique dans l'environnement, le dispositif de surveillance (16) comprenant :
une radio primaire de dispositif (64) configurée pour transmettre des données à une première fréquence dans une bande de fréquences supérieure ou égale à 2,4 GHz afin de communiquer avec la radio primaire de concentrateur via le chemin de communication primaire ;
une radio secondaire de dispositif (66) configurée pour transmettre des données à une seconde fréquence dans une bande de fréquences qui est inférieure à la bande de fréquences de la radio primaire de dispositif (64) afin de communiquer avec la radio secondaire de concentrateur via le chemin de communication secondaire en cas d'échec de connexion communicative de la radio primaire de dispositif de surveillance (64) à la radio primaire de concentrateur (74).

2. Système de surveillance électronique (10) de la revendication 1, comprenant en outre un concentrateur de station de base (24) abritant la radio primaire de concentrateur (74) et un concentrateur de sécurité (26) abritant la radio secondaire de concentrateur (76).

3. Système de surveillance électronique de la revendication 1, dans lequel le concentrateur de station de base (24) est connecté à un réseau étendu, WAN.

4. Système de surveillance électronique (10) de la revendication 3, dans lequel le concentrateur de sécurité (26) est connecté au WAN via un fournisseur de téléphonie mobile (32).

5. Système de surveillance électronique (10) de la revendication 1, dans lequel :
le dispositif de surveillance (16) est configuré pour évaluer un état de connexion du chemin de communication primaire (52) ; et
le système (10) est configuré pour connecter de manière communicative un dispositif utilisateur (40) au dispositif de surveillance (16) et pour recevoir les données de connexion à partir du dispositif de surveillance (16).

6. Système de surveillance électronique (10) de la revendication 5, dans lequel la connexion communicative entre le dispositif utilisateur (40) et le dispositif de surveillance (16) est définie par :
une connexion communicative entre le dispositif de surveillance (16) et un serveur externe (36) en dehors du WLAN, et
une connexion communicative entre le serveur externe (36) et le dispositif utilisateur (40).

7. Système de surveillance électronique (10) de l'une des revendications précédentes, dans lequel le système (10) est configuré pour amener le dispositif utilisateur (40) à afficher un message correspondant à un défaut de connectivité dans le chemin de communication primaire (52) lorsque le dispositif de surveillance (16) est positionné dans un emplacement qui est à la fois en dehors de la zone de couverture primaire et en dehors de la zone de couverture secondaire.

8. Système de surveillance électronique (10) de la revendication 7, dans lequel le système (10) est configuré pour amener le dispositif utilisateur (40) à afficher un message correspondant à une connexion défectueuse de système à la fois au chemin de communication primaire (52) et au chemin de communication secondaire (54) lorsque le dispositif de surveillance (16) est positionné à la fois en dehors de la zone de couverture primaire et de la zone de couverture secondaire.

9. Système de surveillance électronique (10) de l'une des revendications précédentes, dans lequel le dispositif de surveillance (16) comprend au moins l'un parmi :
un dispositif d'imagerie (18) qui est configuré pour capturer des images visuelles ou une vidéo d'une zone surveillée dans l'environnement ;
un dispositif audio qui comprend au moins l'un parmi : (i) un microphone, et (ii) un haut-parleur configuré pour une communication audio ou pour fournir des alertes sonores ; et
un capteur (20) configuré pour détecter au moins l'un parmi : (i) un mouvement, (ii) des événements d'ouverture ou de fermeture de portes ou de fenêtres, (iii) de la fumée, (iv) du monoxyde de carbone, (v) des fuites d'eau, et (vi) des changements de température.

10. Système de surveillance électronique (10) de l'une des revendications précédentes, dans lequel la radio secondaire de concentrateur (76) fonctionne dans une bande de fréquences sub-GHz.

11. Procédé d'évaluation d'un emplacement de montage potentiel d'un dispositif de surveillance (16) d'un système de surveillance électronique (10) mettant en œuvre un réseau local sans fil WLAN, le procédé comprenant :
le placement du dispositif de surveillance (16) dans un emplacement de montage potentiel ;
l'évaluation d'un état de connexion d'un chemin de communication primaire (52), comprenant :
l'activation d'une radio primaire de dispositif de surveillance (64) ;
la tentative de connexion communicative de la radio primaire de dispositif de surveillance (64) à une radio primaire de concentrateur (74) qui est configurée pour fonctionner dans une bande de fréquences supérieure ou égale à 2,4 GHz afin d'établir des communications via un chemin de communication primaire (52) ; et
en cas d'échec de connexion communicative de la radio primaire de dispositif de surveillance (64) à la radio primaire de concentrateur (74),
l'activation automatique d'une radio secondaire de dispositif de surveillance (66), et
la tentative de connexion communicative de la radio secondaire de dispositif de surveillance (66) à une radio secondaire de concentrateur (76) qui est configurée pour fonctionner dans une bande de fréquences qui est inférieure à la bande de fréquences de la radio primaire de concentrateur (74) afin d'établir des communications via un chemin de communication secondaire (54).

12. Procédé de la revendication 11, comprenant en outre :
la déterminer automatique, en utilisant un programme informatique stocké dans un dispositif de stockage à mémoire non transitoire, consistant à savoir si la tentative d'établissement de communications via le chemin de communication primaire (52) a réussi.

13. Procédé de la revendication 12, comprenant en outre :
la transmission de données d'évaluation d'emplacement qui correspondent à une évaluation de l'emplacement de montage potentiel d'un dispositif de surveillance (16) via le chemin de communication secondaire (54),
l'affichage d'informations d'acceptabilité d'emplacement sur un dispositif utilisateur (40) sur la base des données d'évaluation d'emplacement.

14. Procédé de la revendication 13, comprenant en outre :
en utilisant un programme informatique stocké dans un dispositif de stockage à mémoire non transitoire, la détermination consistant à savoir si la tentative de communication via le chemin de communication secondaire (54) a réussi, et
en réponse à la détermination consistant à savoir si la tentative de communication via le chemin de communication secondaire (54) a réussi, l'affichage automatique d'informations de connexion sur le dispositif utilisateur (40) correspondant à un état du dispositif de surveillance (16).

15. Procédé de la revendication 11, dans lequel :
le chemin de communication primaire (52) définit une zone de couverture primaire,
le chemin de communication secondaire (54) définit une zone de couverture secondaire qui s'étend au-delà de la zone de couverture primaire ; et
le procédé comprend en outre :
le déplacement du dispositif de surveillance (16) pendant l'évaluation de l'emplacement de montage potentiel ;
le maintien d'une connexion communicative du dispositif de surveillance (16) **au WLAN** pendant que le dispositif de surveillance (16) traverse une limite de zone définie entre la zone de couverture primaire et la zone de couverture secondaire en passant automatiquement de la mise en œuvre du chemin de communication primaire (52) à la mise en œuvre du chemin de communication secondaire (54).
